(19) Europäisches Patentamt
European Patent Office
Office européen des brevets

(11) EP 1 561 727 B1

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(51) Int Cl.:
***C01B 33/193*** *(2006.01)* ***C09C 1/30*** *(2006.01)*
***B01D 19/04*** *(2006.01)*

(21) Anmeldenummer: **04107016.0**

(22) Anmeldetag: **28.12.2004**

(54) **Fällungskieselsäure für Entschäumerformulierungen**

Precipitated silica for defoaming compositions

Silice de précipitation pour les compositions démoussantes

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.02.2004 DE 102004005409**

(43) Veröffentlichungstag der Anmeldung:
**10.08.2005 Patentblatt 2005/32**

(73) Patentinhaber: **Degussa GmbH**
**40474 Düsseldorf (DE)**

(72) Erfinder:
- **Panz, Christian**
**50389, Wesseling (DE)**
- **Allerdisse, Rene**
**50999, Köln (DE)**
- **Obladen, Helga**
**50321, Brühl (DE)**
- **Löbbus, Mario**
**63739, Aschaffenburg (DE)**
- **Lukas, Anja**
**63456, Hanau (DE)**
- **Bergmann, Roland**
**63538, Grosskrotzenburg (DE)**
- **Meier, Karl**
**53347, Alfter (DE)**

(56) Entgegenhaltungen:
**WO-A-03/014020**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 561 727 B1

## Beschreibung

Die vorliegende Erfindung betrifft hydrophile Fällungskieselsäuren mit hohem pH-Wert und niedriger Silanolgruppendichte, ein Verfahren zu deren Herstellung sowie deren Verwendung.

Hydrophile Fällungskieselsäuren sowie Verfahren zu deren Herstellung sind bekannt. Üblicherweise erfolgt dabei die Fällung der Kieselsäure durch simultane Zugabe eines Alkalimetall- oder Erdalkalimetallsilikats und eines Säurungsmittels in eine Vorlage aus Wasser oder Silicatlösung. Nach der Fällung wird der pH-Wert der erhaltenen Suspension zwecks Verhinderung eines Fortgangs der Reaktion durch Zugabe von Säurungsmittel auf Werte zwischen 2 und 4 eingestellt, anschließend wird filtriert, getrocknet und die getrocknete Kieselsäure gegebenenfalls vermahlen. Die resultierenden Fällungskieselsäuren weisen dann am Ende der Herstellungsprozesses einen in etwa neutralen pH-Wert, d. h. pH-Werte zwischen 6 und 8 auf. Beispiele für solche Fällungen finden sich in der EP 0 647 591 und der EP 0 901 986. In der WO 2003014020 werden Fällungskieselsäuren mit einem pH-Wert von zumindest 9.5 als Trägermaterialien vorgeschlagen. Die WO 2003014020 lehrt, dass die hydrophilen Fällungskieselsäuren mit einem pH-Wert von zumindest 9.5 hydrophobiert werden müssen, bevor sie als Komponente in Entschäumerformulierungen eingesetzt werden können.

Die Verwendung von hydrophilen und hydrophoben Fällungskieselsäuren in Entschäumerformulierungen ist ebenfalls bekannt (Schriftenreihe Pigmente, Nr. 42, Fa. DEGUSSA, 06/1986). Die Verwendung in Entschäumerformulierungen stellt an die eingesetzten Fällungskieselsäuren hohe Anforderungen. So sollten sie leicht und gut in die Entschäumerformulierung dispergierbar sein, zu einer raschen Knock-Down-Zeit (Ansprechzeit), vollständigem Knock-Down (Soforteffekt) und langem Hold-Down (Standzeit) führen. Die Kenngröße "Knock-Down" beschreibt die Fähigkeit des Entschäumers, die Schaumhöhe sofort nach Zugabe bis zu einer bestimmten Schaumhöhe zu verringern. Der Hold-Down charakterisiert die Standzeit des Entschäumers, d. h. die Dauer der Wirksamkeit. Konkret wird die Zeit gemessen, bis ein bestimmtes Schaumniveau wieder erlangt wird. Daneben charakterisiert die Knock-Down-Zeit die Zeitdauer, die bis zum Erreichen des Knock-down bezogen auf das Schaummaximum vergeht. Fällungskieselsäuren aus dem Stand der Technik weisen für die genannten Parameter oder zumindest einige der genannten Parameter unbefriedigende Werte auf.

Aufgabe der vorliegenden Erfindung war es daher, neuartige Fällungskieselsäuren bereitzustellen, die sehr gute anwendungstechnische Eigenschaften, insbesondere in Entschämerformulierungen aufweisen. Ferner soll ein Verfahren bereitgestellt werden, mit dem die erfindungsgemäßen Fällungskieselsäuren hergestellt werden können.

Überraschenderweise wurde gefunden, dass diese Aufgabe durch die in der nachfolgenden Beschreibung sowie den Ansprüchen und den Beispielen näher definierten erfindungsgemäßen Kieselsäuren sowie das in der Beschreibung, den Beispielen und den Ansprüchen näher beschriebene Verfahren gelöst wird.

Gegenstand der vorliegenden Erfindung sind hydrophile, alkalische Fällungskieselsäuren mit niedriger Silanolgruppendichte, gekennzeichnet durch die folgenden physikalisch-chemischen Parameter:

| | |
|---|---|
| BET | 100 - 190 $m^2/g$ |
| Modifizierte Sears-Zahl | 8-20 ml/(5g) |
| Sears-Zahl/BET-Verhältnis | < 0.12 ml/(5$m^2$) |
| pH-Wert | > 8 |

Gegenstand der Erfindung sind auch hydrophile Fällungskieselsäuren die neben den genannten Parametern, unabhängig voneinander, einen oder mehrere der folgenden physikalisch-chemischen Parameter aufweisen:

| | |
|---|---|
| CTAB | 100 - 190 $m^2/g$ |
| BET/CTAB-Verhältnis | 0.8 - 1.2 |
| DBP | < 300 g/(100g) |
| Mittlere Partikelgröße $d_{50}$ | < 14 $\mu$m |
| Stampfdichte | < 150 g/l |
| Glühverlust | 2 - 6% |
| Trockenverlust | 1 - 6 % |

Gegenstand der vorliegenden Erfindung ist zudem ein Verfahren, mit dem die erfindungsgemäßen Fällungskieselsäuren hergestellt werden können, dass die nachfolgenden Schritte:

a) Fällung einer Fällungskieselsäure umfassend folgende Unterschritte

aa) Aufheizen einer Vorlage aus Wasser oder Wasser mit, Wasserglas vermischt auf eine Temperatur zwischen 60 und 100°C, bevorzugt 70 bis 90°C
ab) Simultane Zugabe von Wasserglas und Säure in die Vorlage.
ac) Erniedrigung des pH-Wertes durch Zugabe eines Säurungsmittels,

b) Filtration,
c) Verflüssigung des Filterkuchens durch Zugabe von Wasser,
d) Trocknung der Suspension,
f) Vermahlung der Fällungskieselsäure,

umfasst und in dem ein Schritt

e) Alkalisierung der Fällungskieselsäure durch Zugabe von zumindest einem basischen Mittel

durchgeführt wird. Schritt e) kann sowohl vor als auch nach Schritt d) durchgeführt werden.

Weiterhin Gegenstand der Erfindung ist die Verwendung der erfindungsgemäßen Fällungskieselsäuren, insbesondere in Entschäumerformulierungen.

Die Erfinder haben erkannt, dass Fällungskieselsäuren, die für den Einsatz in Entschäumerformulierungen besonders gut geeignet sind, so beschaffen sein müssen, dass sie sich optimal an der Grenzfläche zwischen Öl und Wasser einlagern.

Nur dann ist es möglich, die Schaumblasen effektiv zu zerstören. Es erwies sich als entscheidend, dass die Oberfläche der Fällungskieselsäuren eine optimale Dichte an hydrophilen Zentren aufweist. Die Zahl der hydrophilen Zentren auf der Kieselsäureoberfläche wird durch die Einstellung des pH-Wertes kontrolliert. Je höher der pH-Wert im Endprodukt ist, um so ausgeprägter sind die für die Entschäumeranwendung notwendigen hydrophilen Zentren an der Kieselsäureoberfläche. Hydrophile Zentren können jedoch nur dort auf der Fällungskieselsäureoberfläche entstehen, wo vor der Behandlung mit der basischen Komponente Silanolgruppen vorhanden waren. Um den hydrophilen Charakter der Kieselsäure nicht zu stark auszuprägen, ist es wichtig, dass die erfindungsgemäßen Fällungskieselsäuren eine optimale Silanolgruppendichte aufweisen. Ein Maß für die absolute Zahl an Silanolgruppen ist die modifizierte Sears-Zahl. Diese Silanolgruppendichte kann daher durch das Sears-Zahl/BET-Verhältnis ausgedrückt werden. Die erfindungsgemäßen Fällungskieselsäuren zeichnen sich daher durch einen hohen pH-Wert bei gleichzeitig niedriger Silanolgruppendichte aus.
Die erfindungsgemäßen hydrophilen Fällungskieselsäuren zeichnen sich neben dem hohen pH-Wert und der optimierten Silanolgruppendichte durch:

- eine niedrige Stampfdichte
- einen optimierten Glühverlust
- eine optimierte Partikelgröße
- eine optimierte Sears-Zahl

aus. Sie eignen sich daher hervorragend als Entschäumerkomponente in Entschämerformulierungen. Insbesondere sorgen sie für eine kurze Knock-Down-Zeit, einen annähernd vollständigen Knock-Down und einen langen Hold-Down. Ferner lassen sich die erfindungsgemäßen Fällungskieselsäuren besonders leicht und homogen in Entschäumerformulierungen einarbeiten.

Die Gegenstände der vorliegenden Erfindung werden nachfolgend im Detail beschrieben.

Die erfindungsgemäßen Fällungskieselsäuren weisen die folgenden physikalischchemischen Parameter:

| | |
|---|---|
| BET | 100 - 190 $m^2/g$ |
| Modifizierte Sears-Zahl | 8 - 20 ml/(5g) |
| Sears-Zahl/BET-Verhältnis | < 0.12 ml/($5m^2$) |
| pH-Wert | > 8 |

auf. Ferner können Sie optional, unabhängig voneinander einen oder mehrere der folgenden physikalisch chemischen Parameter aufweisen:

| | |
|---|---|
| CTAB | 100 - 190 $m^2/g$ |
| BET/CTAB-Verhältnis | 0.8 - 1.2 |

(fortgesetzt)

| | |
|---|---|
| DBP | < 300 g/(100g) |
| Mittlere Partikelgröße $d_{50}$ | < 14 μm |
| Stampfdichte | < 150 g/l |
| Glühverlust | 2 - 6 % |
| Trockenverlust | 1 - 6 % |

Die erfindungsgemäßen Fällungskieselsäuren weisen bevorzugt eine BET-Oberfläche von 120 - 190 $m^2/g$, besonders bevorzugt 125 - 175 $m^2/g$, ganz besonders bevorzugt 135 - 175 $m^2/g$ und insbesondere 140 - 175 $m^2/g$ auf. Die erfindungsgemäßen Fällungskieselsäuren können CTAB-Oberfläche aufweisen, die bevorzugt bei 120 - 190 $m^2/g$ und ganz besonders bevorzugt bei 125 - 175 $m^2/g$ liegen. Das BET/CTAB-Verhältnis der erfindungsgemäßen Fällungskieselsäuren kann im Vorzugsbereich von 0.9 bis 1.2 und besonders bevorzugt bei 0.9 bis 1.15 liegen, ferner können sie eine bevorzugte Ölaufnahme DBP von 180 - 260 g/(100 g) aufweisen.
Durch Zugabe einer basischem Komponente während der Herstellung der Fällungskieselsäuren wird der pH-Wert der trockenen Kieselsäure eingestellt. Je höher der pH-Wert im Endprodukt ist, um so ausgeprägter sind die für die Entschäumeranwendung notwendige hydrophilen Zentren an der Kieselsäureoberfläche. Daher liegt der pH-Wert der erfindungsgemäßen Kieselsäure vorzugsweise zwischen 8 und 10, besonders bevorzugt von 8.5 bis 10 und insbesondere von größer gleich 8.5 bis kleiner als 9.5.
Die modifizierte Sears-Zahl der erfindungsgemäßen Fällungskieselsäuren liegt bevorzugt bei 8 - 16 ml/(5g), besonders bevorzugt bei 8 - 15 ml/(5g), ganz besonders bevorzugt bei 9 - 14 ml/(5g) und insbesondere bei 10 - 14 ml/(5g).
Hydrophile Zentren können auf der Kieselsäureoberfläche nur dort entstehen, wo vor der Behandlung mit der basischen Komponente Silanolgruppen vorhanden waren. Um den hydrophilen Charakter der Kieselsäure nicht zu stark auszuprägen, ist es wichtig, dass die erfindungsgemäße Fällungskieselsäure eine geringe Silanolgruppendichte aufweist. Diese Silanolgruppendichte kann durch das Sears-Zahl/BET-Verhältnis ausgedrückt werden. Die erfindungsgemäßen Fällungskieselsäuren weisen bevorzugt ein Sears-Zahl/BET-Verhältnis von < 0.11 ml/($5m^2$), besonders bevorzugt < 0.1 ml/($5m^2$), ganz besonders bevorzugt 0.07 bis 0.11 ml/($5m^2$) und 0.07 bis 0.1 ml/($5m^2$) auf.
Die mittlere Partikelgröße $d_{50}$, die die Voraussetzung für eine gute und homogene Einarbeitung in die Entschäumerformulierung ist, liegt bevorzugt bei < 10 μm, besonders bevorzugt bei < 7.5 μm, ganz besonders bevorzugt bei < 6 μm und insbesondere bei < 5 μm.
Schließlich können die erfindungsgemäßen Fällungskieselsäuren eine bevorzugte Stampfdichte von < 100 g/l, besonders bevorzugt ≤ 80 g/l und ≤ 70 g/l sowie einem bevorzugten Glühverlust von 2 - 4 % aufweisen.
Alle genannten Vorzugsbereiche können unabhängig voneinander eingestellt werden.
Die erfindungsgemäßen Fällungskieselsäuren können nach einem Verfahren, hergestellt werden, welches die Schritte

a) Fällung einer Fällungskieselsäure umfassend folgende Unterschritte

  aa) Aufheizen einer Vorlage aus Wasser oder Wasser mit Wasserglas vermischt auf eine Temperatur zwischen 60 und 100 °C, bevorzugt 70 bis 90 °C
  ab) Simultane Zugabe von Wasserglas und Säure in die Vorlage
  ac) Erniedrigung des pH-Wertes durch Zugabe eines Säurungsmittels,

b) Filtration,
c) Verflüssigung des Filterkuchens durch Zugabe von Wasser,
d) Trocknung der Suspension,
f) Vermahlung der Fällungskieselsäure,

umfasst und in dem ein Schritt

e) Alkalisierung der Fällungskieselsäure durch Zugabe von zumindest einem basischen Mittel

durchgeführt wird. Schritt e) kann zu verschiedenen Zeitpunkten im erfindungsgemäßen Verfahren durchgeführt werden. Im nachfolgenden Text wird darauf im Detail eingegangen.
Die aktualisierte Füllungskieselsäure wird abschlissend in Schritt 1 vernommen.
Die simultane Zugabe von Wasserglas und Säurungsmittel In Schritt ab) erfolgt bevorzugt derart, dass der pH-Wert auf einem Wert zwischen 7 und 11, bevorzugt 8 bis 9 gehalten wird. Die Messung des pH-Wertes erfolgt dabei

bei 60 °C. Die Temperatur der Reaktionslösung wird in Schritt ab) auf einem Wert zwischen 60 und 100 °C, bevorzugt zwischen 65 und 95 °C, besonders bevorzugt zwischen 70 und 90°C gehalten. Die Zugabe von Säuerungsmittel und Wasserglas wird bis zu einem Feststoffgehalt von 40 bis 70 g/l, bevorzugt von 45 bis 6,5 g/l, besonders bevorzugt von 50 bis 60 g/l fortgeführt und dann gestoppt. Somit ergibt sich eine Fällzeit von 70 bis 140 min, bevorzugt 80 bis 130 min.

In Schritt ac) wird der pH-Wert der Fällsuspension durch Zugabe eines Säurungsmittels, welches bevorzugt identisch ist mit dem aus Schritt ab), auf einem Wert von 2 bis 8 bevorzugt von 2.5 bis 4, besonders bevorzugt von 3 bis 4 eingestellt. Die Messung des pH-Wertes erfolgt bei 60°C. Durch die hier beschriebene Prozessführung während der Fällung wird eine geringe Silanolgruppendichte auf der Oberfläche der Fällungskieselsäure eingestellt.

Das in Schritt ab) eingesetzte Wasserglas weist ein Modul von 3 bis 3.8, bevorzugt von 3.3 bis 3.5 und eine Dichte von 1.1 bis 1.39 g/ml, bevorzugt von 1.2 bis 1.36 g/ml, besonders bevorzugt von 1.3 bis 1.4 g/ml auf.

Das in den Schritten ab) und ac) eingesetzte Säurungsmittel kann eine Mineralsäure, insbesondere Schwefelsäure, Salzsäure, Phosphorsäure, Salpetersäure oder Kohlensäure oder Kohlendioxid sein. Bevorzugt wird Schwefelsäure mit einer Konzentration von 1 bis 18.76 mol/l, bevorzugt von 6 bis 18.8 mol/l.

Nach Schritt ac) gegebenenfalls ein Schritt ad) Reifung der Fällsuspension bei 10 bis 95 °C, bevorzugt bei 40 bis 60 °C, für 0 bis 72 Stunden, bevorzugt 0 bis 12 Stunden, durchgeführt werden.

In Schritt b) wird die Fällungssuspension filtriert und der Filterkuchen gewaschen. Die Filtration der zuvor hergestellten Fällsuspension und das Waschen des Filterkuchens werden mit bekannten Verfahren, wie z. B. durch Filtration mit einer Membranfilterpresse durchgeführt (Ullmann's Encyclopedia of industrial chemistry, 1992, 5th edition, vol. B1, page 10-1 - 10-59). Zum Waschen des Filterkuchens wird bevorzugt deionisiertes Wasser verwendet. Der erhaltene Filterkuchen weist einen Feststoffgehalt von 13 bis 25 %, bevorzugt 15 bis 17 % auf.

In Schritt c) wird der Filterkuchen verflüssigt. In einer ersten Ausführungsform des erfindungsgemäßen Verfahrens wird der Filterkuchen dabei durch Zugabe von Wasser, bevorzugt deionisiertem Wasser und unter Rühren, verflüssigt.

In einer zweiten Ausführungsform wird der Schritt c) zusammen mit Schritt e) durchgeführt. D. h. die Verflüssigung des Filterkuchens erfolgt unter Zugabe von Wasser, bevorzugt deionisiertem Wasser, und unter Rühren. Durch gleichzeitige (Schritte: c) + e)) oder anschließende Zugabe (Schritte: c) -> e)), einer oder mehrerer basischer Komponenten wird der pH-Wert der Suspension auf Werte zwischen 7 und 11, günstigerweise größer als 8, bevorzugt zwischen 8 - 10,5, 8 und 10 sowie besonders bevorzugt auf Werte von 8 bis kleiner 9.5 eingestellt.

Werden zwei Verfahrensschritte durch ein "+" Zeichen verbunden (z. B. c) + e)) so bedeutet dies, dass die beiden Verfahrensschritte zusammen durchgeführt werden. Werden die Verfahrensschritte hingegen durch ein "->" verbunden (z. B. c) -> e)) so bedeutet dies, dass die Verfahrensschritte nacheinander durchgeführt werden.

Unabhängig von der Ausführungsform des Schrittes c) weist die erhaltene Suspension einen Feststoffgehalt von 6 bis 20 %, bevorzugt von 6 bis 17 %, besonders bevorzugt von 6 bis 11 % auf. In beiden Ausführungsformen kann es notwendig sein, dass die Verflüssigung unter Einwirkung von Scherenergie erfolgt. Dabei soll nur soviel Scherenergie eingetragen werden, wie man gerade eben zur Verflüssigung benötigt. Die Suspension aus den vorherigen Verfahrensstufen erhaltene Suspension wird in Schritt d) getrocknet. Hierzu sind dem Fachmann vielerlei Trocknungsmethoden bekannt (Ullmann's Encyclopedia of industrial chemistry, 1992, 5th edition, vol. B1, page 7-21 - 7-25). Als vorteilhaft haben sich Trocknungen mittels Stromtrockner, Sprühtrockner, Etagentrockner, Bandtrockner, Drehrohrtrockner, Flash-Trockner, Spin-Flash-Trockner oder Düsenturm erwiesen. Besonders bevorzugt erfolgt die Trocknung mittels Sprühtrockner oder Düsenturm.

Falls die Verflüssigung des Filterkuchens in Schritt c) gemäß Ausführungsform 1, d. h. ohne Zugabe eines basischen Mittels erfolgt, so wird die basische Komponente nach der Trocknung in einem Mischaggregat, z.B. niedrigscherende Pflugscharmischer wie z. B. Lödige-Mischer auf die Fällungskieselsäure aufgesprüht. In diesem Fall erfolgt Schritt e) also nach Schritt d). Der pH-Wert der Fällungskieselsäure wird in diesem Fall auf einen Wert zwischen 7 und 11, günstiger Weise größer als 8, bevorzugt zwischen 8 und 10, besonders bevorzugt zwischen 8.5 und 10, insbesondere größer gleich 8.5 und kleiner als 9.5 eingestellt.

Als basische Komponente können in Schritt e) Alkalihydroxide oder -carbonate, Erdalkalihydroxide oder -carbonate, Alkalioxide, Erdalkalioxide, Alkalisilicate, Erdalkalisilicate, Ammoniak und Alkalialuminate oder wässrige Lösungen oder Gemische besagter Basen eingesetzt werden. Bevorzugt wird Natronlauge und Kalilauge verwendet.

Es ist auch möglich, eine basische Komponente sowohl während Schritt c) als auch nach Schritt d) zuzugeben. Dabei können die o. g. basischen Komponenten eingesetzt werden. Wird die Alkalisierung in Schritt e) nach Schritt d) durchgeführt, so folgt danach bevorzugt ein weiterer Trocknungsschritt.

Die Vermahlung und Sichtung von Fällungskieselsäuren (Schritt f) erfolgt nach bekannten Verfahren (Ullmann's Encyclopedia of industrial chemistry, 1992, 5th edition, vol. B1, page 5-20 - 5-39). Die erfindungsgemäße Fällungskieselsäure kann auf verschiedenen Mühlen wie z.B. Prallmühle, Luftstrahlmühle oder Gegenstrahlmühle auf die gewünschte Endfeinheit vermahlen werden. Die Sichtung kann während oder nach der Vermahlung erfolgen. In der Regel werden die erfindungsgemäßen hydrophoben Fällungskieselsäuren auf eine mittlere Partikelgröße $d_{50}$ von < 14 μm, bevorzugt < 10 μm, besonders bevorzugt < 7.5 μm, ganz besonders bevorzugt < 6 μm und insbesondere < 5 μm vermahlen.

Die erfindungsgemäßen Fällungskieselsäuren werden bevorzugt in Entschäumerformulierungen zur Vermeidung starker Schaumbildung verwendet.

Weiterhin können die erfindungsgemäßen Kieselsäuren in allen Anwendungsgebieten verwendet werden, in denen üblicherweise Kieselsäuren eingesetzt werden, wie z. B. als verstärkender Füllstoff in Silikonkautschukformulierungen, in HTV-Silikonkautschuk als aufhellendes Additiv in peroxidisch vernetzenden Systemen, als Fließhilfsmittel, in Batterieseparatoren, als Anti-Blocking-Mittel, als Mattierungsmittel in Farben und Lacken, als Träger z. B. von Agrarprodukten und Nahrungsmitteln, in Beschichtungen, in Druckfarben, in Feuerlöschpulvern, in Kunststoffen, im Bereich non impact printing, in Papiermasse, im Bereich personal care und Spezialanwendungen.

Unter Verwendung im Bereich non impact printing z. B. im Inkjet-Verfahren ist die Verwendung der erfindungsgemäßen Kieselsäuren in

- Druckfarben zur Verdickung oder zum Verhindern von Spritzen und Abliegen,
- Papier als Füllstoff, Streichpigment, Lichtpauspapier, Thermopapier, bei der Thermosublimation zur Verhinderung des Durchschlagens von Druckfarben, zur Verbesserung der Bildgrundruhe und Kontrast, zur Verbesserung der Punktschärfe und der Farbbrillianz zu verstehen.
- Unter Verwendung im Bereich personal care ist die Verwendung der erfindungsgemäßen Kieselsäuren als Füllstoff oder Verdickungsmittel z. B. im Bereich der Pharmazie oder Körperpflege zu verstehen.

Meßmethoden

Die physikalisch/chemischen Daten der erfindungsgemäßen Fällungskieselsäuren werden mit den folgenden Methoden bestimmt:

Bestimmung der BET-Oberfläche

Die spezifische Stickstoff-Oberfläche (im folgenden BET-Oberfläche genannt) der pulverförmigen, kugelförmigen oder granulären Kieselsäure wird gemäß ISO 5794-1/Annex D mit einem Areameter (Fa. Ströhlein, JUWE) bestimmt.

Bestimmung der spezifischen Oberfläche (CTAB)

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).
Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$\underset{\text{NDSS}}{(C_{20}H_{37}O_4)SO_3Na} + \underset{\text{CTAB}}{BrN(CH_3)_3(C_{16}H_{33})} \longrightarrow (C_{20}H_{37}O_4)SO_3N(CH_3)_3(C_{16}H_{33}) + NaBr$$

Geräte

- Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
- Titrierbecher 100 ml aus Polypropylen •
- Titrierglasgefäß, 150 ml mit Deckel
- Druckfiltrationsgerät, 100 ml Inhalt
- Membranfilter aus Cellulosenitrat, Porengröße 0.1 µm, 47 mm Ø, z. B. Whatman (Best. Nr. 7181-004)

Reagenzien

Die Lösungen von CTAB ($C_{CTAB}$ = 5.5 g/l in entionisiertem Wasser) und NDSS (0.00423 mol/l in entionisiertem Wasser) werden gebrauchsfertig bezogen (Fa. Kraft, Duisburg: Bestell-Nr. 6056.4700 CTAB-Lösung 0.015 mol/l; Bestell-Nr. 6057.4700 NDSS-Lösung 0.00423 mol/l), bei 25 °C aufbewahrt und innerhalb von einem Monat aufgebraucht.

Durchführung

1. Blindtitration

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).
Es werden genau 5.00 ml CTAB-Lösung in einen Titrierbecher pipettiert und man fügt 50.0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in ml. Jede Titration ist als Dreifachbestimmung auszuführen.

2. Adsorption

10.0 g der pulverförmigen, kugelförmigen oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500.0 mg der zerkleinerten Probe (Einwaage E) werden in ein 150 ml Titriergefäß mit Magnetrührstäbchen überführt und es werden genau 100.0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0.1 mol/l) auf einen Wert von 9 ± 0.05 eingestellt. Sollte der pH-Wert bereits größer als pH = 9 sein, wird keine pH Korrektur vorgenommen, um die Oberfläche nicht zu verändern.
Es erfolgt eine 4-minütige Beschallung der Suspension in dem Titriergefäß in einem Ultraschallbad (Fa. Bandelin, Sonorex RK 106 S, 35 kHz) bei 25 °C. Anschließend erfolgt eine umgehende Druckfiltration durch einen Membranfilter bei einem Stickstoffdruck von 1.2 bar. Der Vorlauf von 5 ml wird verworfen.

3. Titration

5.00 ml des übrigen Filtrats werden in einen 100 ml Titrierbecher pipettiert und mit entionisiertem Wasser auf 50.00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Trübung ist als Dreifachbestimmung auszuführen.

Berechnung

$$CTAB(nicht\ feuchtekorrigiert) = \frac{V_A - V_B}{V_A} * \frac{C_{CTAB} * T_1 * P}{E}$$

| | |
|---|---|
| $V_A$ = | Verbrauch an NDSS-Lösung in ml bei der Titration der Blindprobe |
| $V_B$ = | Verbrauch an NDSS-Lösung in ml bei Verwendung des Filtrats |
| $C_{CTAB}$ = | Konzentration der CTAB-Lösung in g/l |
| $T_1$ = | Zugegebene Menge an CTAB-Lösung |
| P = | Platzbedarf für 1 g CTAB = 578,435 * $10^{-3}$ $m^2$ |
| E = | Einwaage an Kieselsäure |

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g\ *\ 100}{100\ -\ Feuchte\ in\ \%}$$

Die Feuchte der Kieselsäure wird gemäß der nachfolgend beschriebenen Methode "Bestimmung der Feuchte bzw. des Trockenverlusts" ermittelt.

Bestimmung des pH-Wertes

Das Verfahren in Anlehnung an DIN EN ISO 787-9 dient zur Bestimmung des pH-Wertes einer wässrigen Suspension von Kieselsäuren bei 20 °C.
Vor der Durchführung der pH-Messung ist das pH-Messgerät (Fa. Knick, Typ: 766 pH-Meter Calimatic mit Temperaturfühler) und die pH-Elektrode (Einstabmesskette der Fa. Schott, Typ N7680) unter Verwendung der Pufferlösungen bei 20 °C zu kalibrieren. Die Kalibrierungsfunktion ist so zu wählen, dass die zwei verwendeten Pufferlösungen den erwarteten pH-Wert der Probe einschließen (Pufferlösungen mit pH 4.00 und 7.00, pH 7.00 und pH 9.00 und ggf. pH 7.00 und 12.00).
5.00 g pulverförmige oder kugelförmige, hydrophobe Kieselsäure mit 5 ± 1 % Feuchtegehalt (gegebenenfalls wird der Feuchtegehalt durch Trocknen bei 105 °C im Trockenschrank oder gleichmäßiges Befeuchten vor der evtl. Zerkleinerung eingestellt werden auf einer Präzisionswaage auf 0.01 g genau in eine zuvor tarierte Glas-Weithalsflasche eingewogen. Es wird bis zur 100 ml-Markierung mit 50.0 ml Methanol p.A. und 50.0 ml entionisiertes Wasser aufgefüllt.
Anschließend wird die Suspension im verschlossenen Gefäß für die Dauer von 5 Minuten mittels einer Schüttelmaschine (Fa. Gerhardt, Modell LS10, 55 W, Stufe 7) bei 20 °C geschüttelt. Die Messung des pH-Wertes erfolgt direkt im Anschluss. Dazu wird die Elektrode zunächst mit entionisierten Wasser, nachfolgend mit einem Teil der Suspension abgespült und anschließend in die Suspension eingetaucht. Nach Zugabe eines Magnetfisches in die Suspension wird bei einer konstanten Rührgeschwindigkeit mit leichter Trombenbildung der Suspension die pH-Messung durchgeführt. Nach exakt 5 min wird der pH-Wert an der Anzeige abgelesen.

Bestimmung der DBP-Aufnahme

Die DBP-Aufnahme (DBP-Zahl), die ein Maß für die Saugfähigkeit der Fällungskieselsäure ist, wird in Anlehnung an die Norm DIN 53601 wie folgt bestimmt: 12.50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 3.15 bis 1 mm (Edelstahlsiebe der Fa. Retsch) verwendet (durch sanftes Drücken der Granulate mit einem Kunststoffspatel durch das Sieb mit 3.15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0.6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.
Die DBP-Aufnahme wird in g/100g angegeben und anhand der folgenden Formel berechnet:

$$DBP = \frac{V * D * 100}{E} * \frac{g}{100g} + K$$

mit

DBP = DBP-Aufnahme in g/100g
*V* = Verbrauch an DBP in ml
*D* = Dichte von DBP in g/ml (1,047 g/ml bei 20 °C)
*E* = Einwaage an Kieselsäure in g
*K* = Korrekturwert gemäß Feuchtekorrekturtabelle in g/100g

Die DBP-Aufnahme ist für die wasserfreie, getrocknete Kieselsäure definiert. Bei Verwendung von feuchten

Fällungskieselsäuren ist der Korrekturwert *K* für die Berechnung der DBP-Aufnahme zu berücksichtigen. Dieser Wert kann anhand der folgenden Korrekturtabelle ermittelt werden, z. B. würde ein Wassergehalt der Kieselsäure von 5.8 % einen Zuschlag von 33 g/(100 g) für die DBP-Aufnahme bedeuten. Die Feuchte der Kieselsäure wird gemäß der nachfolgend beschriebenen Methode "Bestimmung der Feuchte bzw. des Trockenverlusts" ermittelt.

Feuchtekorrekturtabelle für Dibutylphthalataufnahme -wasserfrei

| % Wasser | .% Wasser<br>.0 | .2 | .4 | .6 | .8 |
|---|---|---|---|---|---|
| 0 | 0 | 2 | 4 | 5 7 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

Bestimmung der modifizierten Sears-Zahl von Kieselsäuren

Durch die Titration von Kieselsäure mit Kaliumhydroxid-Lösung im Bereich von pH 6 bis pH 9 läßt sich die modifizierte Searszahl (im folgenden Searszahl $V_2$ genannt) als Maß für die Zahl an freien Hydroxy-Gruppen bestimmen. Der Bestimmungsmethode liegen die folgenden chemischen Reaktionen zu Grunde, wobei "Si"-OH eine Silanolgruppe der Kieselsäure symbolisieren soll:

$$\text{„Si“–OH} + \text{NaCl} \Rightarrow \text{„Si“–ONa} + \text{HCl}$$

$$\text{HCl} + \text{KOH} \Rightarrow \text{KCl} + H_2O.$$

10.00 g einer pulverförmigen, kugelförmigen oder granulären Kieselsäure mit 5 ± 1 % Feuchte werden 60 Sekunden mit einer IKA-Universalmühle M 20 (550 W; 20 000 U/min) zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2.50 g der so behandelten Kieselsäure werden bei Raumtemperatur in ein 250 ml Titriergefäß eingewogen und mit 60.0 ml Methanol p. A. versetzt. Nach vollständiger Benetzung der Probe werden 40.0 ml entionisiertes Wasser zugegeben, und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am Gefäßrand und Rührer anhaftenden Probepartikel in die Suspension gespült und in einem thermostatisiertem Wasserbad auf 25 °C temperiert.
Das pH-Messgerät (Fa. Knick, Typ: 766 pH-Meter Calimatic mit Temperaturfühler) und die pH-Elektrode (Einstabmesskette der Fa. Schott, Typ N7680) werden unter Verwendung von Pufferlösungen (pH 7.00 und 9.00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0.1 mol/l) bzw. Salzsäurelösung (0.1 mol/l) der pH-Wert auf 6.00 eingestellt. Der Verbrauch an KOH- bzw. HCl-Lösung in ml bis pH 6.00 entspricht $V_1$'.
Danach werden 20.0 ml Natriumchlorid-Lösung (250.00 g NaCl p. A. mit entionisiertem Wasser auf 1 l aufgefüllt) zudosiert. Mit 0.1 mol/l KOH wird dann die Titration bis zum pH-Wert 9.00 fortgesetzt. Der Verbrauch an KOH-Lösung in ml bis pH 9.00 entspricht $V_2$'.

Anschließend werden die Volumina $V_1$', bzw. $V_2$' zunächst auf die theoretische Einwaage von 1 g normiert und mit 5 erweitert, woraus sich $V_1$ und die Searszahl $V_2$ in den Einheiten ml/(5 g) ergeben.

Bestimmung der Methanolbenetzbarkeit

Hydrophobe Kieselsäuren und Silikate lassen sich durch Zusatz von Methanol wasserbenetzbar machen. Dies erfolgt durch Methanol - Wasser - Gemische unterschiedlicher Konzentration. Es lassen sich so Aussagen über den Hydrophobierungsgrad der Kieselsäuren oder Silikate treffen.

Durchführung:

In 6 gleiche Zentrifugengläser von 15 ml Inhalt werden jeweils 200 mg hydrophobe Kieselsäure oder Silikat eingewogen und jedes der Gläser mit 8 ml eines MethanolWasser-Gemisches steigender Methanolkonzentration versetzt.
Die Methanolkonzentration der Gemische richtet sich nach der zu erwartenden Methanolbenetzbarkeit. Die Zentrifugengläser werden dicht verschlossen und dann kräftig geschüttelt (10 Auf- und Abwärtsbewegungen). Zur Abtrennung der benetzten Kieselsäure-Silikatanteile werden die Gläser dann 5 Minuten bei 2500 UpM zentrifugiert. Die benetzten Anteile bilden einen Bodensatz, dessen Volumina an der Skala der Zentrifugengläser abgelesen werden. Die Sediment-Volumina werden in einer Graphik gegen die Methanol/Wasser-Gemisch-Konzentration aufgetragen.
Die einzelnen Meßpunkte ergeben eine Kurve (x-Achse: prozentualer Anteil an Methanol der Methanol/Wasser-Gemische, y-Achse: Höhe des Sediments), deren Lage und Steilheit den Hydrophobierungsgrad der Fällungskieselsäure charakterisiert. Als Maß für die Hydrophobierung wird der x-Achsen-Wert (in %) am Wendepunkt der Kurve angegeben.

Bestimmung der mittleren Partikelgröße ($d_{50}$)

Die Anwendung der Laserbeugung zur Bestimmung von Teilchengrößen basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.

Probenvorbereitung:

In einem 50 ml Schraubverschlussglas werden 4 ml des Pulvers mit 30 ml Ethanol durch Schütteln gemischt.

Durchführung:

Vor Beginn der Messung lässt man das Laserbeugungsgerät LS 230 (Fa. COULTER) und das Flüssigkeitsmodul (Small Volume Module Plus, 120 ml, Fa. COULTER) 2 h warmlaufen und spült das Modul dreimal mit Ethanol. Eine Offsetmessung und eine Justierung erfolgt vom Gerät automatisch jede Stunde. In der Steuerleiste der Gerätesoftware wählt man über dem Menüpunkt "Messung" das Dateifenster "Opt. Modell berechnen" aus und legt die Brechungsindizes in einer .rfd-Datei fest: Flüssigkeitsbrechungsindex B. I. Real = 1.333; Material Brechungsindex Real = 1.46; Imaginär = 0.1. Die Pumpengeschwindigkeit wird auf 50 % eingestellt.
Grundsätzlich wird vor jeder Messung automatisch eine Hintergrundmessung durchgeführt. Eine Einwegpipette wird vor jeder Probennahme mit der Suspension dreimal gespült. Etwa 2 ml der Suspension werden mit der Pipette entnommen und 1 - 3 Tropfen sofort in das Flüssigkeitsmodul des Gerätes eindosiert. Der Rest in der Einwegpipette wird in das Becherglas zurückgegeben. Nach der Zugabe wird gewartet, bis das Laserbeugungsgerät eine konstante Konzentration anzeigt. Es wird solange Suspension zugefügt, bis eine Lichtabsorption von 8 bis 12 % erreicht ist und das Gerät OK" meldet. Die Messung erfolgt bei Raumtemperatur mit dem Auswertemodell der oben festgelegten .rfd-Datei.
Zunächst wird eine Partikelmessung ohne Ultraschall durchgeführt. Danach erfolgt eine zweite, dritte und vierte Messung der gleichen Probe, bei der für 1,2, und 3 min das Ultraschallgerät (SONICS VIBRACELL) bei einer Leistung von 20 W eingeschaltet wird. Weichen die Messungen wesentlich voneinander ab, so müssen die Messungen wiederholt werden. Bleiben die Unterschiede auch nach der Wiederholung bestehen, dann wird die Messung angegeben, die einer monomodalen gaußschen Teilchengrößenverteilung am nächsten kommt. So zeigen z.B. typischerweise sprühgetrocknete, hydrophobierte, unvermahlene Proben reproduzierbare, im wesentlichen monomodale Teilchengrößenverteilungen, wenn Sie ohne Ultraschallbehandlung gemessen werden. Bei hydrophobierten, feinvermahlenen Proben zeigen sich reproduzierbare, näherungsweise monomodale Teilchengrößenverteilungen oft erst nach einer 2 bis 3 Minuten Ultraschall. Bei sehr feinteiligen Proben kann es bei längerer Ultraschallbehandlung in gewissem Umfang zu Agglomerationserscheiniungen kommen.
Im Zweifelsfall werden entweder alle Werte angegeben oder die Meßwerte entsprechend gekennzeichnet. Dabei steht

für 0, 1, 2, 3 Minuten Ultraschall die Kürzel: 0 min.US, 1 min.US, 2 min.US und 3 min.US.
Aus der Rohdatenkurve berechnet die Software auf Basis der Volumenverteilung unter Berücksichtigung der Mie-Theorie und den optischen Modellparametem (.rfd Datei) die Teilchengrößenverteilung.

Bestimmung des Feststoffgehalts von Filterkuchen

In eine trockene, tarierte Porzellanschale (Durchmesser 20 cm) werden 100.00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 $\pm$ 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.
Man bestimmt die Feststoffgehalt in % gemäß

FG = A / E * 100,
mit FG = Feststoffgehalt in %
A = Auswaage in g
E = Einwaage in g

Bestimmung des Feststoffgehaltes von Suspensionen

Der Feststoffgehalt der Fällsuspension wird gravimetrisch nach Filtration der Probe bestimmt.

Durchführung

100.0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. SCHLEICHER & SCHUELL) in einer Porzellannutsche filtriert, aber nicht trocken gesaugt, um Rißbildung des Filterkuchens zu verhindern. Anschließend wäscht man den Filterkuchen mit 100.0 ml entionisiertem Wasser. Der ausgewaschene Filterkuchen wird komplett filtriert, in eine tarierte Porzellanschale überführt und bei 105 $\pm$ 2 °C in einem Trockenschrank bis zur Gewichtskonstanz getrocknet. Das Gewicht der getrockneten Kieselsäure ($m_{Probe}$) wird ermittelt.
Der Feststoffgehalt in g/l bestimmt sich gemäß:

Feststoffgehalt i= $m_{Probe}$ / $V_{Suspension}$, wobei
$m_{Probe}$ = Gewicht der getrockneten Kieselsäure
$V_{Suspension}$ = Volumen der untersuchten Fällsuspension

Bestimmung der Feuchte bzw. des Trockenverlusts

Die Feuchte oder auch Trockenverlust (TV) von Kieselsäuren wird in Anlehnung an ISO 787-2 nach 2 stündiger Trocknung bei 105 °C bestimmt. Dieser Trocknungsverlust besteht überwiegend aus Wasserfeuchtigkeit.
In ein trockenes Wägeglas mit Schliffdeckel (Durchmesser 8 cm, Höhe 3 cm) werden 10 g der pulverförmigen, kugelförmigen oder granulären Kieselsäure auf 0.1 mg genau eingewogen (Einwaage E). Die Probe wird bei geöffnetem Deckel 2 h bei 105 $\pm$ 2 °C in einem Trockenschrank getrocknet. Anschließend wird das Wägeglas verschlossen und in einem Exsikkatorschrank mit Kieselgel als Trocknungsmittel auf Raumtemperatur abgekühlt.
Das Wägeglas wird zur Bestimmung der Auswaage A auf der Präzisionswaage auf 0,1 mg genau ausgewogen. Man bestimmt die Feuchte (TV) in % gemäß

$$TV = (1 - A / E) * 100,$$

wobei A = Auswaage in g und E = Einwaage in g bedeuten.

Bestimmung des Glühverlusts

Nach dieser Methode wird der Gewichtsverlust von Kieselsäure in Anlehnung an DIN EN ISO 3262-1 bei 1000 °C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung der

Feuchte bzw. des Trockenverlusts" in Anlehnung an DIN EN ISO 787-2 ermittelt.
0.5 g der pulverförmigen, kugelförmigen oder granulären Kieselsäure werden auf 0.1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Kieselgel als Trocknungsmittel auf Raumtemperatur abgekühlt. Die Auswaage A wird gravimetrisch bestimmt. Man erhält den Glühverlust (DIN) GV in % gemäß

$$GV = (1 - A / F) * 100.$$

F bedeutet die = korrigierte Einwaage in g - bezogen auf getrocknete Substanz - und errechnet sich nach

$$F = E * (1 - TV / 100).$$

In den Berechnungen bedeuten A = Auswaage in g, E = Einwaage in g und TV = Trockenverlust in %.

<u>Bestimmung der Stampfdichte</u>

Die Bestimmung der Stampfdichte erfolgt in Anlehnung an DIN EN ISO 787-11. Eine definierte Menge einer zuvor nicht gesiebten Probe wird in einen graduierten Glaszylinder eingefüllt und mittels eines Stampfvolumeters einer festgelegten Anzahl von Stampfungen unterzogen. Während der Stampfung verdichtet sich die Probe. Als Ergebnis der durchgeführten Untersuchung erhält man die Stampfdichte.
Die Messungen werden auf einem Stampfvolumeter mit Zählwerk der Fa. Engelsmann, Ludwigshafen, Typ STAV 2003, durchgeführt.
Zunächst wird ein 250 ml Glaszylinder auf einer Präzisionswaage tariert. Anschließend werden 250 ml Kieselsäure mit Hilfe eines Pulvertrichters so in den tarierten Meßzylinder eingefüllt, dass sich keine Hohlräume bilden. Dies wird durch Neigen und Drehen des Zylinders um seine Längsachse während des Einfüllens erreicht. Anschließend wird die Probenmenge auf 0,01 g genau gewogen. Danach wird leicht an den Zylinder geklopft, so dass die Oberfläche der Kieselsäure im Zylinder waagrecht ist. Der Meßzylinder wird in den Messzylinderhalter des Stampfvolumeters eingesetzt und 1250 mal gestampft. Das Volumen der gestampften Probe wird nach einmaligem Stampfdurchgang auf 1 ml genau abgelesen.
Die Stampfdichte D(t) berechnet sich wie folgt:

$$D(t) = m * 1000 / V$$

D(t): Stampfdichte in g/l
V: Volumen der Kieselsäure nach dem Stampfen in ml
m: Masse der Kieselsäure in g

Die folgende Beispiele sollen die Erfindung näher erläutern, ohne ihren Umfang zu beschränken.

**Beispiel 1:**

In einem 80 l-Fällgefäß werden 63 l deionisiertes Wasser vorgelegt und auf 88 °C erwärmt. Zu dieser Vorlage werden Wasserglas (Modul = 3.5; Dichte = 1.343 g/ml) mit einer Dosiergeschwindigkeit von 6.5 l/h und Schwefelsäure (Konzentration = 7.167 mol/l) mit einer Dosiergeschwindigkeit von 1.56 l/h so zudosiert, dass ein pH-Wert von 8.0 - 8.5 (gemessen an einer 60°C warmen Probe) eingehalten wird. Nach 100 Minuten werden die Zudosierungen beendet. Anschließend wird die Fällsuspension mit Schwefelsäure (Konzentration = 7.167 mol/l) bei gleicher Dosiergeschwindigkeit wie zuvor bis zu einem pH-Wert von 3.0 angesäuert und im Trockenschrank bei 50 °C für die Dauer von 22 Stunden nachbehandelt.
Die Suspension wird filtriert und mit deionisiertem Wasser ausreichend gewaschen. Der erhaltene Feststoffgehalt des Filterkuchens liegt bei 15 - 17 %.
Der Filterkuchen wird unter Vorlage von deionisiertem Wasser und schonendem Rühren so verflüssigt, dass sich eine Kieselsäuresuspension von 6 - 11 % Feststoffgehalt ergibt. Dann wird diese Suspension mit NaOH-Lösung (50 Gew.-%) auf einen pH-Wert von 9 eingestellt. Unmittelbar danach erfolgt die Sprühtrocknung der Suspension (Trocknerausgangstemperatur 130 °C). Die getrocknete Fällungskieselsäure wird mittels einer Gegenstrahlmühle (50 AFG, Fa. HOSOKAWA-ALPINE) vermahlen.

Das erhaltene Produkt weist folgende physikalisch-chemischen Parameter auf:

| | |
|---|---|
| BET | 152 $m^2/g$ |
| CTAB | 158 $m^2/g$ |
| BETICTAB-Verhältnis | 0.96 |
| DBP (wasserfrei) | 246 g/(100g) |
| pH-Wert | 8.5 |
| Mod. Sears-Zahl | 11.5 ml/(5g) |
| Sears/BET-Verhältnis | 0.076 ml/($5m^2$) |
| Trocknungsverlust | 1.0 % |
| Glühverlust | 3.4 % |
| Stampfdichte | 41 g/l |
| mittlere Partikelgröße $d_{50}$ | 2.6 μm |

**Beispiel 2:**

In einem $2m^3$-Fällbehälter werden 1679 l deionisiertes Wasser vorgelegt und auf 88 °C erwärmt. Zu dieser Vorlage werden Wasserglas (Modul = 3.5; Dichte = 1.343 g/ml) mit einer Dosiergeschwindigkeit von 3.93 kg/h und Schwefelsäure (Konzentration = 17.62 mol/l) mit einer Dosiergeschwindigkeit von 0.509 kg/h so zudosiert, dass ein pH-Wert von 8.0 bis 8.5 (gemessen an einer 60°C warmen Probe) eingehalten wird. Nach 100 Minuten werden die Zudosierungen beendet. Anschließend wird die Fällsuspension mit Schwefelsäure (Konzentration = 17.62 mol/l) bei gleicher Dosiergeschwindigkeit wie zuvor bis zu einem pH-Wert von 3.0 angesäuert und im Alterungsbehälter bei 50 °C für die Dauer von 22 Stunden nachbehandelt.
Die Suspension wird filtriert und mit deionisiertem Wasser ausreichend gewaschen. Der erhaltene Feststoffgehalt des Filterkuchens liegt bei 15 - 17 %.

Der Filterkuchen wird unter Vorlage von deionisiertem Wasser und schonendem Rühren so verflüssigt, dass sich eine Kieselsäuresuspension von 6 - 11 % Feststoffgehalt ergibt. Dann wird diese Suspension mit NaOH-Lösung (50 Gew.-%) auf einen pH-Wert von 9.5 eingestellt. Unmittelbar danach erfolgt die Sprühtrocknung (Trocknerausgangstemperatur 90 °C) der Suspension. Die getrocknete Fällungskieselsäure wird mittels einer Gegenstrahlmühle (50 AFG, Fa. HOSOKAWA-ALPINE) vermahlen.

Das erhaltene Produkt weist folgende physikalisch-chemischen Parameter auf:

| | |
|---|---|
| BET | 145 $m^2/g$ |
| CTAB | 156 $m^2/g$ |
| BET/CTAB-Verhältnis | 0.93 |
| DBP (wasserfrei) | 218 g/(100g) |
| pH-Wert | 9.4 |
| Mod. Sears-Zahl | 15.3 ml/(5g) |
| Sears/BET-Verhältnis | 0.106 ml/($5m^2$) |
| Trocknungsverlust | 1.96 % |
| Glühverlust | 2.88 % |
| Stampfdichte | 80 g/l |
| mittlere Partikelgröße $d_{50}$ | 3.4 μm |

**Beispiel 3 bis 4 und Vergleichsbeispiele 1**

In den Beispielen 3 und 4 sowie im Vergleichsbeispiel 1 werden Fällungskieselsäuren auf ihre Eignung in Entschäumerformulierungen untersucht. Die Eigenschaften von Fällungskieselsäuren werden dabei an Modellformulierungen untersucht, die einen weiten Bereich der industriell verwendeten Formulierungen und Einsatzgebiete abdecken.

Eine Grundvoraussetzung für eine leistungsfähige Formulierung ist ein effektiver Dispersionsschritt der hochdispersen Fällungskieselsäure in ausgewählten Ölen. Dabei kommt es darauf an, die Fällungskieselsäure möglichst homogen in der Ölphase zu verteilen, ohne die Fällungskieselsäure durch zu hohe Scherkräfte zu zerstören.

Herstellung einer Dispersion von Fällungskieselsäure in Silikonöl

Reagenzien

- Siliconöl "DC 200/100 cs" (Polydimetylsiloxan, Fa. Dow Corning, Datenblatt vom 31.03.1998)
- Hydrophobe Fällungskieselsäure

Geräte

- Analysenwaage
- Becherglas 250 ml, Höhe: 120 mm; Durchmesser: 60 mm
- Ultra Turrax T50 (Fa. Janke & Kunkel)

Durchführung

Herstellung der Siliconöldispersionen:

In ein 250 ml Becherglas werden auf der Analysenwaage 7.00 g Siliconöl und 3.00 g der zu prüfenden Fällungskieselsäure eingewogen. Die Fällungskieselsäure wird vorsichtig mit einem Spatel eingerührt, bis sie vollständig benetzt ist. Anschließend wird mit einem Ultra Turrax T50 für 10 Minuten bei 10000 U/min dispergiert. Dabei kann sich die Dispersion erwärmen.
Nachdem die Dispersion auf Raumtemperatur abgekühlt ist, kann sie für die anwendungstechnischen Prüfungen eingesetzt werden.

Herstellung einer Dispersion von Fällungskieselsäure in Mineralöl

Reagenzien

- Mineralöl "SHELL RISELLA Oil G 18" (Fa. Deutsche Shell, Datenblatt VSV-T(F) 7 v. August 1996)
- Hydrophobe Fällungskieselsäure

Geräte

- Analysenwaage
- Becherglas 250 ml, Höhe: 120 mm; Durchmesser: 60 mm
- Ultra Turrax T50 (Fa. Janke & Kunkel)

Durchführung

In einem 250 ml Becherglas werden auf der Analysenwaage 57.00 g Mineralöl und 3.00 g der zu prüfenden Fällungskieselsäure eingewogen. Die Fällungskieselsäure wird vorsichtig mit einem Spatel eingerührt, bis sie vollständig

benetzt ist. Anschließend wird mit einem Ultra Turrax T50 für 10 Minuten bei 10000 U/min dispergiert. Dabei kann sich die Dispersion erwärmen. Nachdem sie auf Raumtemperatur abgekühlt ist, kann sie für die anwendungstechnischen Prüfungen eingesetzt werden.

Prüfung der Entschäumungswirkung

Dieser Entschäumertest ist besonders geeignet, um bewegte schäumende Systeme abzubilden.

Reagenzien:

- Testwaschmittel, bestehend aus:
  - Natriumdodecylbenzosulfonat (Maranil® Paste A 55, Fa. Cognis Dtl. GmbH & Co. KG, Datenblatt Revision-No. 9-01.2000) 11.67 %
  - Fettalkohol C16-C18 mit ca. 5 mol EO (Dehydol® TA 5, Fa. Cognis Dtl. GmbH & Co. KG,Datenblatt Revision-No. 3-01.1998) 1.21 %
  - Fettalkohol C12-C18 mit ca. 7 mol EO (Dehydol® LT 7, Fa. Cognis Dtl. GmbH & Co. KG,Datenblatt Revision-No. 6-08.1999) 7.24 %
  - 1-Hydroxyethyliden-1,1-diphosphonsäure (Dequest 2010, Fa. Brenntag N.V, Belgien) 0.28 %
  - Natriumsalz eines Maleinsäure/Acrylsäure-Copolymers (Sokolan CP5, Fa. BASF AG, Datenblatt TI/ES 1081d v. Mai 1990) 6.52 %
  - Zeolith A Compound (Wessalith 4020, Fa. Henkel KGaA) 36.58 %
  - Natriumdisilikat (Portil N, Fa. Cognis Dtl. GmbH & Co. KG) 3.26 %
  - Natriumcarbonat 18.11 %
  - Natriumsulfat 15.13 %

Zur Herstellung des Testwaschmittels werden alle pulverförmigen Rohstoffe in einem handelsüblichen Mischgerät z.B. Lödige-Mischer vorgelegt. Die flüssigen Rohstoffe werden unter Rühren auf die pulverförmigen aufgesprüht. Nachdem alle flüssigen Rohstoffe aufgesprüht sind, muß noch ca. 10 min weiter gemischt werden, um eine homogene Verteilung zu erreichen.
Silikonöl- oder Mineralöldispersion der Fällungskieselsäure

Geräte:

- CONTIFOAM - Apparatur
- Zahnradpumpe mit Düse
- Thermostat
- Heizplatte
- Magnetrührer
- Mikroliterpipette

Die Pumpentestapparatur ist in Abbildung 1 schematisch dargestellt. Sie besteht aus einem doppelwandigen Glasgefäß (1), einem temperierten Ölbad, einer Zahnradpumpe (2) sowie einer Schaumhöhenerfassung mittels Fotozellen (3a und 3b). Zunächst wird durch Einrühren von 6 g des IEC-Testwaschmittels in 994 g Wasser eine Waschlauge hergestellt. Durch Zugabe von Natronlauge wird diese auf pH 10 eingestellt.
Zur Testdurchführung werden 500 ml dieser Waschlauge vorsichtig in das Glasgefäß (1) eingefüllt. Die Waschlauge im Glasgefäß wird auf 60 °C erwärmt und durch Einschalten einer Zahnradpumpe (2) mit einer Förderleistung von 1200 ml/min durch eine Düse (Abbildung 2) gefördert, wobei die Waschlauge aufgeschäumt wird. Bei der verwendeten Düse handelt sich um eine Wasserstrahlpumpe nach Friedrichs-Antlinger (Bestell-Nr. 181-9401; Katalog "VWR" von 2003). Gleichzeitig mit Einschalten der Zahnradpumpe wird die Messung gestartet. Nach Erreichen der maximalen Schaumhöhe wird die zu prüfende Entschäumerdispersion (0.07 ml bei Mineralöldispersionen und 0.01 ml bei Siliconöldispersionen) mit einer Mikroliterpipette über ein Septum (4) auf ein Mal injiziert und die zeitliche Entwicklung der Schaumhöhe als Funktion der Zeit aufgezeichnet.
Der schematische Kurvenverlauf ist in Abbildung 3 dargestellt. Nach Einschalten der Zahnradpumpe steigt der Schaum

an (5). Ist eine definierte Schaumhöhe erreicht wird, wird die Entschäumerformulierung eingespritzt (6). Der Schaum fällt in sich zusammen. Je nach Qualität der Entschäumerformulierung ergibt sich die verbleibende Schaumhöhe. Die Fähigkeit des Entschäumers, die Schaumhöhe sofort nach Zugabe bis zu einer bestimmten Schaumhöhe zu verringern, wird durch die Kenngröße "Knock-Down" (7) beschrieben. Er definiert sich als Differenz zwischen der Schaumhöhe zum Zeitpunkt der Zugabe der Entschäumerformulierung und der minimalen verbleibenden Schaumhöhe. Die Zeit, die zwischen Zugabe der Entschäumerformulierung und Erreichen der niedrigsten Schaumhöhe vergeht, wird als Knock-Down-Zeit (8) bezeichnet. Im weiteren Verlauf des Test auf Entschäumungswirkung lässt die Wirkung der Entschäumerformulierung je nach deren Qualität unterschiedlich schnell wieder nach. Die Schaumhöhe steigt wieder an (9). Die Zeit, die zwischen dem Zeitpunkt des Erreichens der minimalen Schaumhöhe nach Zugabe der Entschäumerformulierung und dem Zeitpunkt vergeht, zu dem eine Schaumhöhe von 200 mm wieder erreicht wird, wird durch die Kenngröße Hold-Down (10) charakterisiert. Der Hold-Down ist damit ein Maß für die Standzeit des Entschäumers, d. h. die Dauer der Wirksamkeit. Entschäumerformulierungen, bei denen die Schaumhöhe nicht auf unter 200 mm reduziert wird, wird kein Hold-Down zugeordnet.
Das Ausmaß der Schaumbildung / Menge an Schaum wird u.a. mit der Durchflussmenge, Düsenform bzw. weitere reguliert. Vorteil dieser Prüfmethode ist, dass als Prüflösung verschiedene wässrige, temperierte Schaumlösungen unter dynamischen, praxisnahen Bedingungen getestet werden können. Des weiteren findet eine Kontrolle des Entschäumers über einen bestimmten Zeitraum statt. Es ist nicht nur die Aussage möglich, ob der Entschäumer und somit die darin befindliche Kieselsäure eine Wirkung aufweist, sondern auch wie schnell die Wirkung einsetzt, wie stark sie ist und wie lange sie anhält. Das Nachlassen der Wirkung von Entschäumern ist ein bekanntes Phänomen, das durch extreme Bedingungen (hohe Temperatur, hohe Alkalinität, hohe Scherkräfte) noch beschleunigt wird. Da diese Bedingungen sämtlich nachgestellt werden können, ist eine Aussage, welche Kieselsäure in Kombination mit einem Öl unter praxisnahen Bedingungen die besten Entschäumungseigenschaften aufweist, möglich.

**Beispiel 3:**

Aus dem Produkt aus Beispiel 1 wird sowohl eine Mineralöl- als auch eine Silikonöldispersion hergestellt und auf Entschäumungswirkung untersucht.

**Beispiel 4:**

Aus dem Produkt aus Beispiel 2 wird sowohl eine Mineralöl- als auch eine Silikonöldispersion hergestellt und auf Entschäumungswirkung untersucht.

**Vergleichsbeispiel 1:**

Als Vergleichsbeispiel 1 wird aus der Fällungskieselsäure Zeofoam 166 (Fa. Huber) sowohl eine Mineralöl- als auch eine Silikonöldispersion hergestellt und auf Entschäumungswirkung untersucht.

Tabelle 1:

| | | Beispiel 3 | Beispiel 4 | Vergleichsbeispiel 1 |
|---|---|---|---|---|
| BET | $m^2/g$ | 152 | 145 | 113 |
| CTAB | $m^2/g$ | 158 | 156 | 121 |
| BET/CTAB-Verhältnis | - | 0.96 | 0.93 | 0.93 |
| pH-Wert | - | 8.5 | 9.4 - | 8.5 |
| DBP | g/100g | 246 | 218 | 267 |
| Mod. Sears-Zahl | ml/(5g) | 11.5 | 15.3 | 21.3 |
| Sears/BET-Verhältnis | ml/($5m^2$) | 0.076 | 0.106 | 0.188 |
| Trocknungsverlust | % | 1.02 | 1.96 | 5.1 |
| Glühverlust | % | 3.4 | 2.88 | 3.7 |
| Stampfdichte | g/l | 41 1 | 80 | 93 |
| Mittlere Partikelgröße $d_{50}$ (1 min US /20 W) | µm | 2.6 | 3.4 | 3.8 |
| Knock-Down [1)] | mm | 335.1 | 344.4 | 355.4 |

(fortgesetzt)

| | | Beispiel 3 | Beispiel 4 | Vergleichsbeispiel 1 |
|---|---|---|---|---|
| Knock-Down-Zeit [1)] | min | 0.67 | 0.42 | 1.33 |
| Hold-Down [1)] | min | 15.85 | 14.51 | 11.29 |
| Knock-Down [2)] | mm | 378.3 | 380.0 | 365.6 |
| Knock-Down-Zeit [2)] | min | 0.16 | 0.17 | 0.17 |
| Hold-Down [2)] | min | 2.52 | 2.61 | 2.13 |
| [1)] Mineralöldispersion / Testwaschmittel<br>[2)] Silikonölemulsion / Testwaschmittel | | | | |

Die Kurvenverläufe für den Test auf Entschäumungswirkung für die Beispiele 3 und 4 sowie Vergleichsbeispiel 1 sind in Abbildung 4 (für Mineralöldispersionen) und Abbildung 5 (für Silikonöldispersionen) dargestellt.

## Patentansprüche

1. Fällungskieselsäure, **gekennzeichnet durch**

| | |
|---|---|
| BET | 100 - 190 $m^2/g$ |
| Modifizierte Sears-Zahl | 8 - 20 ml/(5g) |
| Sears-Zahl/BET-Verhältnis | <0.12 ml/(5$m^2$) |
| pH-Wert | > 8. |

2. Fällungskieselsäure nach Anspruch 1,
**dadurch gekennzeichnet,**
**dass** sie eine BET von 120 - 190 $m^2/g$ aufweist

3. Fällungskieselsäure nach einem der Ansprüche 1 oder 2,
**dadurch gekennzeichnet,**
**dass** sie eine CTAB von 100 - 190 $m^2/g$ aufweist.

4. Fällungskieselsäure nach einem der Ansprüche 1 bis 3,
**dadurch gekennzeichnet,**
**dass** sie ein Verhältnis BET/CTAB von 0.8 - 1.2 aufweist.

5. Fällungskieselsäure nach einem der Ansprüche 1 bis 4,
**dadurch gekennzeichnet,**
**dass** sie eine DBP < 300 g/(100g) aufweist.

6. Fällungskieselsäure gemäß einem der Ansprüche 1 bis 5,
**dadurch gekennzeichnet,**
**dass** sie eine mittlere Partikelgröße $d_{50}$ kleiner 14 µm aufweist.

7. Fällungskieselsäure gemäß einem der Ansprüche 1 bis 6,
**dadurch gekennzeichnet,**
**dass** sie eine mittlere Stampfdichte kleiner als 150 g/l aufweist.

8. Fällungskieselsäure gemäß einem der Ansprüche 1 bis 7,
**dadurch gekennzeichnet,**
**dass** sie einen Glühverlust von 2 - 6 %, bevorzugt 2 - 4 %, aufweist.

9. Verfahren zur Herstellung einer Fällungskieselsäuren, umfassend die Schritte

a) Fällung einer Fällungskieselsäure,
b) Filtration,
c) Verflüssigung des Filterkuchens durch Zugabe von Wasser,
d) Trocknung der Suspension,
f) Vermahlung der Fällungskieselsäure,

**dadurch gekennzeichnet,**
**dass** Schritt a) die Unterschritte

aa) Aufheizen einer Vorlage aus Wasser oder Wasser mit Wasserglas vermischt auf eine Temperatur zwischen 60 und 100 °C, bevorzugt zwischen 70 bis 90 °C
ab) Simultane Zugabe von Wasserglas und Säure in die Vorlage
ac) Erniedrigung des pH-Wertes durch Zugabe eines Säurungsmittels,

umfasst
und **dass** ein Schritt

e) Alkalisierung der Fällungskieselsäure durch Zugabe von zumindest einem basischen Mittel

durchgeführt wird.

**10.** Verfahren nach Anspruch 9,
**dadurch gekennzeichnet,**
**dass** nach Schritt ac) der Schritt

ad) Reifung der Fällsuspension bei 10 bis 95 °C, bevorzugt 40 bis 60 °C, für 0 bis 72 Stunden, bevorzugt 0 bis 12 Stunden,

durchgeführt wird.

**11.** Verfahren nach einem der Ansprüche 9 oder 10,
**dadurch gekennzeichnet,**
**dass** der pH-Wert in Schritt ab) auf einen Wert zwischen 7 und 11 gehalten wird.

**12.** Verfahren nach einem der Ansprüche 9 bis 11,
**dadurch gekennzeichnet,**
**dass** die Temperatur der Reaktionslösung in Schritt ab) auf einen Wert zwischen 60 und 100°C gehalten wird.

**13.** Verfahren nach einem der Ansprüche 9 bis 12,
**dadurch gekennzeichnet,**
**dass** die simultane Zugabe von Wasserglas und Säurungsmittel bis zu einem Feststoffgehalt von 40 bis 70 g/l fortgeführt und dann gestoppt wird.

**14.** Verfahren nach einem der Ansprüche 9 bis 13,
**dadurch gekennzeichnet,**
**dass** der pH-Wert in Schritt ac) durch Zugabe eines Säurungsmittels auf 2 bis 8 eingestellt wird.

**15.** Verfahren nach einem der Ansprüche 9 bis 14,
**dadurch gekennzeichnet,**
**dass** Schritt e) gleichzeitig mit Schritt c) durchgeführt wird.

**16.** Verfahren nach einem der Ansprüche 9 bis 14,
**dadurch gekennzeichnet,**
**dass** Schritt e) nach Schritt c) jedoch vor Schritt d) durchgeführt wird.

**17.** Verfahren nach einem der Ansprüche 9 bis 14,
**dadurch gekennzeichnet,**
**dass** Schritt e) nach Schritt d) durchgeführt wird.

**18.** Verfahren nach einem der Ansprüche 9 bis 14,
**dadurch gekennzeichnet,**
**dass** Schritt e) vor und nach Schritt d) durchgeführt wird.

**19.** Verfahren nach einem der Ansprüche 9 bis 18,
**dadurch gekennzeichnet,**
**dass** der pH-Wert der Fällungskieselsäure oder der Suspension in Schritt e), durch Zugabe der basischen Komponente auf 7 bis 11 eingestellt wird.

**20.** Verfahren nach einem der Ansprüche 9 bis 19,
**dadurch gekennzeichnet,**
**dass** das basische Mittel ausgewählt wird aus der Gruppe der Alkalihydroxide, Alkalicarbonate, Erdalkalihydroxide, Erdalkalicarbonate, Alkalioxide, Erdalkalioxide, Alkalisilicate, Erdalkalisilicate, Ammoniak und Alkalialuminate oder wässrige Lösungen oder Gemische besagter Basen

**21.** Verwendung der Fällungskieselsäure gemäß einem der Ansprüche 1 bis 8 in Entschäumerformulierungen.

**22.** Verwendung der Fällungskieselsäure gemäß einem der Ansprüche 1 bis 8 in Silikonkautschuk als verstärkender Füllstoff.

**23.** Verwendung der Fällungskieselsäure gemäß einem der Ansprüche 1 bis 8 in im HTV-Silikonkautschuk als aufhellendes Additiv in peroxidisch vernetzenden Systemen.

**24.** Verwendung der Fällungskieselsäure gemäß einem der Ansprüche 1 bis 8 als Fließhilfsmittel.

**25.** Verwendung der Fällungskieselsäure gemäß einem der Ansprüche 1 bis 8 als Träger.

**26.** Verwendung der Fällungskieselsäure gemäß einem der Ansprüche 1 bis 8 im Bereich Antiblocking.

## Claims

**1.** Precipitated silica **characterized by**

| | |
|---|---|
| BET | 100 - 190 $m^2/g$ |
| Modified Sears number | 8 - 20 ml/(5 g) |
| Sears number/BET ratio | < 0.12 ml/(5 $m^2$) |
| pH | > 8. |

**2.** Precipitated silica according to Claim 1, **characterized in that** it has a BET of 120 - 190 $m^2/g$.

**3.** Precipitated silica according to either of Claims 1 and 2, **characterized in that** it has a CTAB of 100 - 190 $m^2/g$.

**4.** Precipitated silica according to any one of Claims 1 to 3, **characterized in that** it has a BET/CTAB ratio of 0.8 - 1.2.

**5.** Precipitated silica according to one of Claims 1 to 4, **characterized in that** it has a DBP < 300 g/(100 g).

**6.** Precipitated silica according to one of Claims 1 to 5, **characterized in that** it has a mean particle size $d_{50}$ of less than 14 $\mu$m.

**7.** Precipitated silica according to any one of Claims 1 to 6, **characterized in that** it has an average tapped density of less than 150 g/l.

**8.** Precipitated silica according to any one of Claims 1 to 7, **characterized in that** it has a loss on ignition of 2 - 6%, preferably 2 - 4%.

**9.** Process for preparing a precipitated silica, comprising the steps of

a) precipitating a precipitation silica,
b) filtering,
c) liquefying the filtercake by adding water,
d) drying the suspension,
f) milling the precipitated silica,
**characterized in that** step a) has the substeps:

aa) heating an initial charge of water, or of water mixed with waterglass, to a temperature of between 60 and 100°C, preferably between 70°C and 90°C
ab) simultaneously adding waterglass and acid to the initial charge
ac) lowering the pH by adding an acidifier,

and **in that** a step

e) alkalifying the precipitated silica by adding at least one basic agent is performed

**10.** Process according to Claim 9, **characterized in that** step ac) is followed by step

ad) aging the precipitation suspension at 10 to 95°C, preferably 40 to 60°C, for 0 to 72 hours, preferably 0 to 12 hours.

**11.** Process according to either of Claims 9 and 10, **characterized in that** the pH in step ab) is held at a level between 7 and 11.

**12.** Process according to any one of Claims 9 to 11, **characterized in that** the temperature of the reaction solution in step ab) is held at a level between 60 and 100°C,

**13.** Process according to any one of Claims 9 to 12, **characterized in that** the simultaneous addition of waterglass and acidifier is continued to a solids content of 40 to 70 g/l and then stopped.

**14.** Process according to any one of Claims 9 to 13, **characterized in that** the pH in step ac) is adjusted by adding an acidifier to from 2 to 8.

**15.** Process according to any one of Claims 9 to14, **characterized in that** step e) is carried out simultaneously with step c).

**16.** Process according to any one of Claims 9 to14, **characterized in that** step e) is carried out after step c) but before step d).

**17.** Process according to any one of Claims 9 to 14, **characterized in that** step e) is carried out after step d).

**18.** Process according to any one of Claims 9 to14, **characterized in that** step e) is carried out before and after step d).

**19.** Process according to any one of Claims 9 to 18, **characterized in that** the pH of the precipitated silica or of the suspension in step e) is adjusted to from 7 to 11 by adding the basic component.

**20.** Process according to any one of Claims 9 to 19, **characterized in that** the basic agent is selected from the group consisting of alkali metal hydroxides, alkali metal carbonates, alkaline earth metal hydroxides, alkaline earth metal carbonates, alkali metal oxides, alkaline earth metal oxides, alkali metal silicates, alkaline earth metal silicates, ammonia and alkali metal aluminates or aqueous solutions or mixtures of said bases.

**21.** Use of precipitated silica according to any one of Claims 1 to 8 in defoamer formulations.

**22.** Use of precipitated silica according to any one of Claims 1 to 8 in a silicone rubber as a reinforcing filler.

**23.** Use of precipitated silica according to any one of Claims 1 to 8 in an HTV silicone rubber as a lightening additive in peroxidically crosslinking systems.

**24.** Use of precipitated silica according to any one of Claims 1 to 8 as a flow assistant.

**25.** Use of precipitated silica according to any one of Claims 1 to 8 as a carrier.

**26.** Use of precipitated silica according to any one of Claims 1 to 8 in the antiblocking sector.

## Revendications

**1.** Silice précipitée, **caractérisée par**

| | |
|---|---|
| surface BET | 100-190 $m^2/g$ |
| indice de Sears modifié | 8-20 ml/(5 g) |
| rapport indice de Sears/surface BET | <0,12 ml/(5 $m^2$) |
| pH | >8. |

**2.** Silice précipitée selon la revendication 1, **caractérisée en ce qu'**elle présente une surface BET de 120-190 $m^2/g$.

**3.** Silice précipitée selon l'une quelconque des revendications 1 ou 2, **caractérisée en ce qu'**elle présente une surface CTAB de 100-190 $m^2/g$.

**4.** Silice précipitée selon l'une quelconque des revendications 1 à 3, **caractérisée en ce qu'**elle présente un rapport surface BET/surface CTAB de 0,8-1,2.

**5.** Silice précipitée selon l'une quelconque des revendications 1 à 4, **caractérisée en ce qu'**elle présente une absorption d'huile DBP < 300 g/(100 g).

**6.** Silice précipitée selon l'une quelconque des revendications 1 à 5, **caractérisée en ce qu'**elle présente une grosseur moyenne des particules $d_{50}$ inférieure à 14 $\mu$m.

**7.** Silice précipitée selon l'une quelconque des revendications 1 à 6, **caractérisée en ce qu'**elle présente une densité tassée moyenne inférieure à 150 g/l.

**8.** Silice précipitée selon l'une quelconque des revendications 1 à 7, **caractérisée en ce qu'**elle présente une perte au feu de 2-6%, de préférence de 2-4%.

**9.** Procédé de préparation d'une silice précipitée, comprenant les étapes de

a) précipitation d'une silice précipitée,
b) filtration,
c) fluidification du gâteau de filtre par addition d'eau,
d) séchage de la suspension,
f) broyage de la silice précipitée,

**caractérisé en ce que** l'étape a) comprend les sous-étapes de

aa) chauffage d'une charge préalable d'eau ou d'eau mélangée avec du verre soluble à une température entre 60 et 100°C, de préférence entre 70 et 90°C
ab) addition simultanée de verre soluble et d'acide dans la charge préalable
ac) diminution du pH par addition d'un agent acidifiant,

et **en ce qu'**on réalise une étape

e) d'alcalinisation de la silice précipitée par addition d'au moins un agent basique.

**10.** Procédé selon la revendication 9, **caractérisé en ce qu'**on réalise après l'étape ac) l'étape de ad) maturation de

la suspension de précipitation à 10 jusqu'à 95°C, de préférence à 40 jusqu'à 60°C, pendant 0 à 72 heures, de préférence pendant 0 à 12 heures.

**11.** Procédé selon l'une quelconque des revendications 9 ou 10, **caractérisé en ce que** le pH dans l'étape ab) est maintenu à une valeur entre 7 et 11.

**12.** Procédé selon l'une quelconque des revendications 9 à 11, **caractérisé en ce que** la température de la solution réactionnelle dans l'étape ab) est maintenue à une valeur entre 60 et 100°C.

**13.** Procédé selon l'une quelconque des revendications 9 à 12, **caractérisé en ce que** l'addition simultanée de verre soluble et d'agent acidifiant est continuée jusqu'à une teneur en solides de 40 à 70 g/1, puis est arrêtée.

**14.** Procédé selon l'une quelconque des revendications 9 à 13, **caractérisé en ce que** le pH dans l'étape ac) est réglé à 2 jusqu'à 8 par addition d'un agent acidifiant.

**15.** Procédé selon l'une quelconque des revendications 9 à 14, **caractérisé en ce que** l'étape e) est réalisée simultanément avec l'étape c).

**16.** Procédé selon l'une quelconque des revendications 9 à 14, **caractérisé en ce que** l'étape e) est réalisée après l'étape c) mais avant l'étape d).

**17.** Procédé selon l'une quelconque des revendications 9 à 14, **caractérisé en ce que** l'étape e) est réalisée après l'étape d).

**18.** Procédé selon l'une quelconque des revendications 9 à 14, **caractérisé en ce que** l'étape e) est réalisée avant et après l'étape d).

**19.** Procédé selon l'une quelconque des revendications 9 à 18, **caractérisé en ce que** le pH de la silice précipitée ou de la suspension dans l'étape e) est réglé à 7 jusqu'à 11 par addition du composant basique.

**20.** Procédé selon l'une quelconque des revendications 9 à 19, **caractérisé en ce que** l'agent basique est choisi dans le groupe constitué par les hydroxydes de métal alcalin, les carbonates de métal alcalin, les hydroxydes de métal alcalino-terreux, les carbonates de métal alcalino-terreux, les oxydes de métal alcalin, les oxydes de métal alcalino-terreux, les silicates de métal alcalin, les silicates de métal alcalino-terreux, l'ammoniaque et les aluminates de métal alcalin ou des solutions aqueuses ou des mélanges desdites bases.

**21.** Utilisation de la silice précipitée hydrophobe selon l'une quelconque des revendications 1 à 8 dans des formulations d'antimousses.

**22.** Utilisation de la silice précipitée selon l'une quelconque des revendications 1 à 8 dans du caoutchouc de silicone comme charge renforçante.

**23.** Utilisation de la silice précipitée selon l'une quelconque des revendications 1 à 8 dans du caoutchouc de silicone HTV (durcissant à température élevée) comme additif éclaircissant dans des systèmes réticulant par un peroxyde.

**24.** Utilisation de la silice précipitée selon l'une quelconque des revendications 1 à 8 comme adjuvant d'écoulement.

**25.** Utilisation de la silice précipitée selon l'une quelconque des revendications 1 à 8 comme support.

**26.** Utilisation de la silice précipitée selon l'une quelconque des revendications 1 à 8 dans le domaine de l'anti-adhérence.

## CONTIFOAM - Apparatur

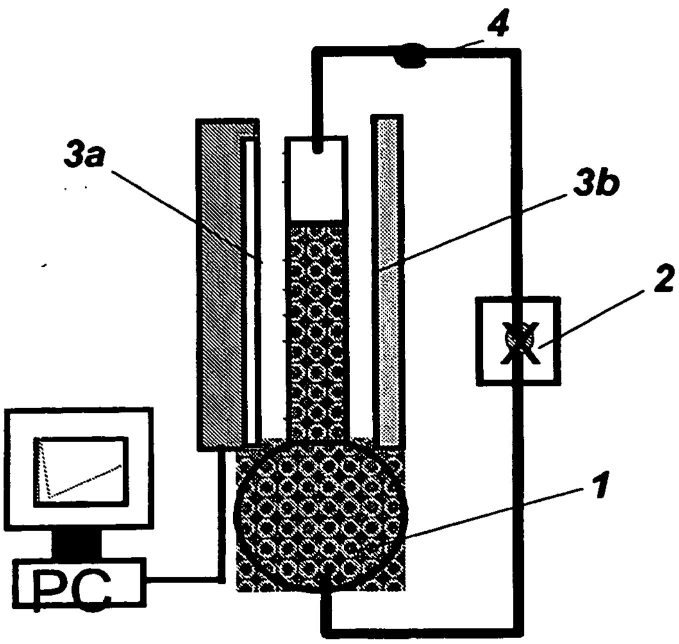


Abbildung 1

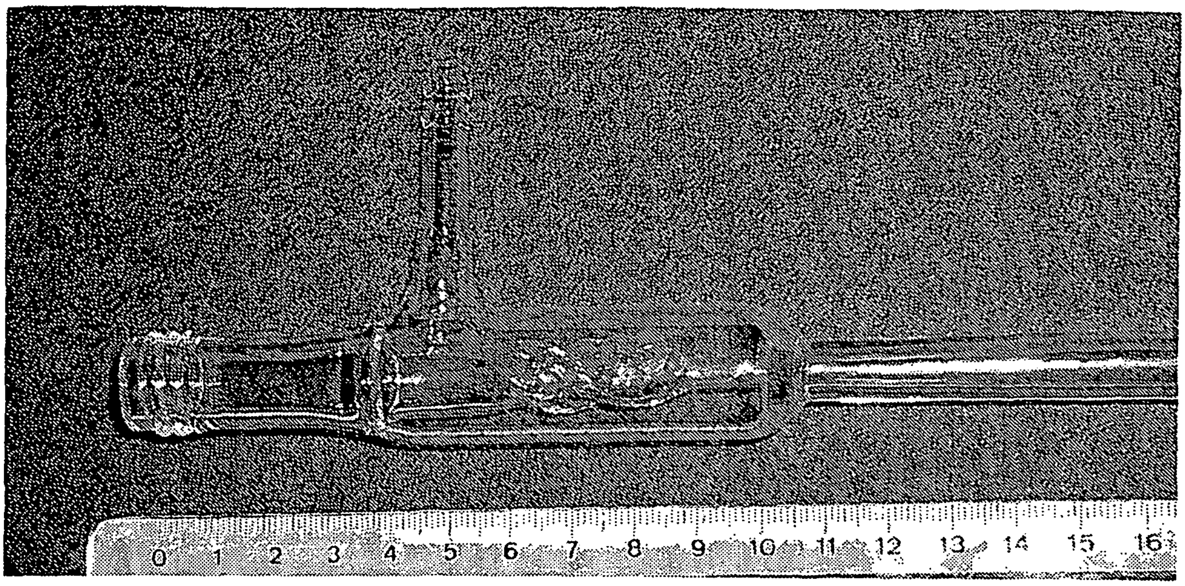


**Abbildung 2**

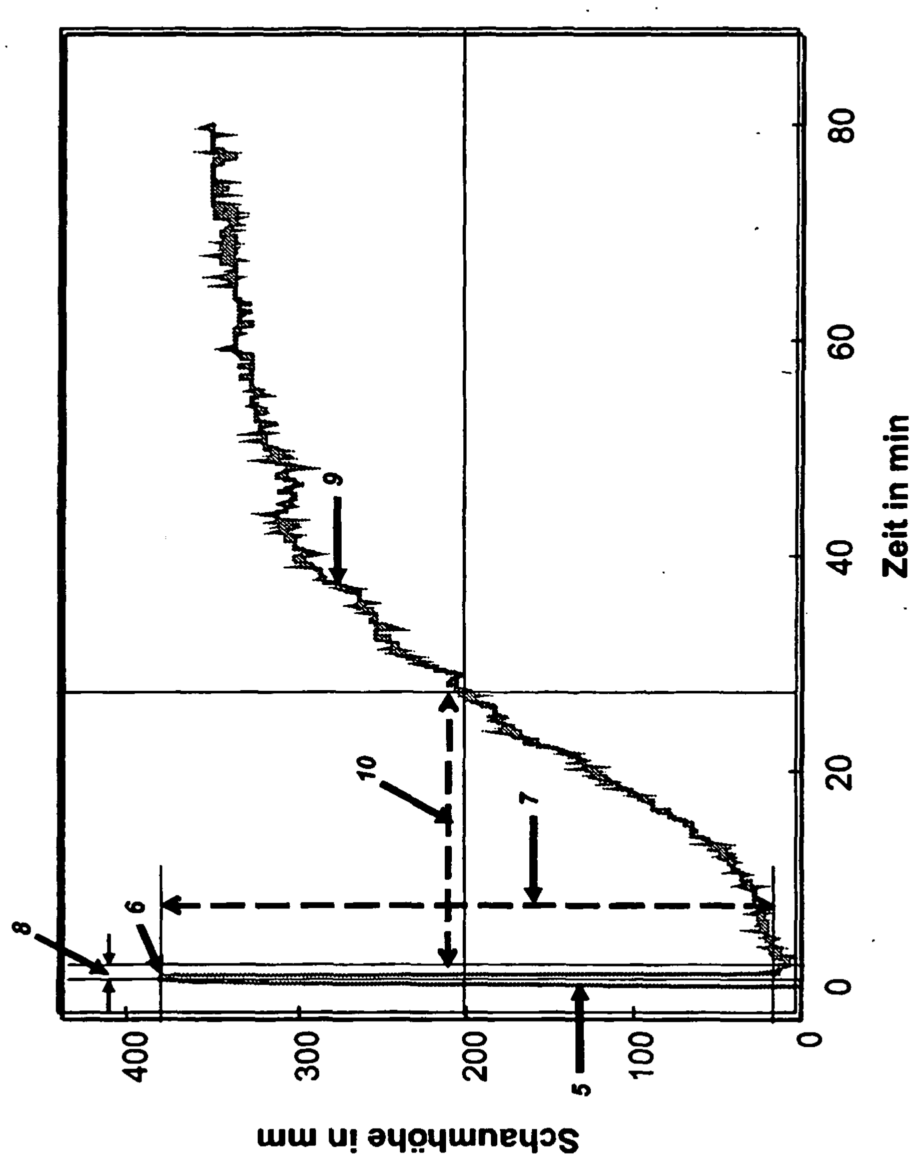
Schaumhöhe in mm
0
100
200
300
400
Zeit in min
0
20
40
60
80
5
6
7
8
9
10

Abbildung 3

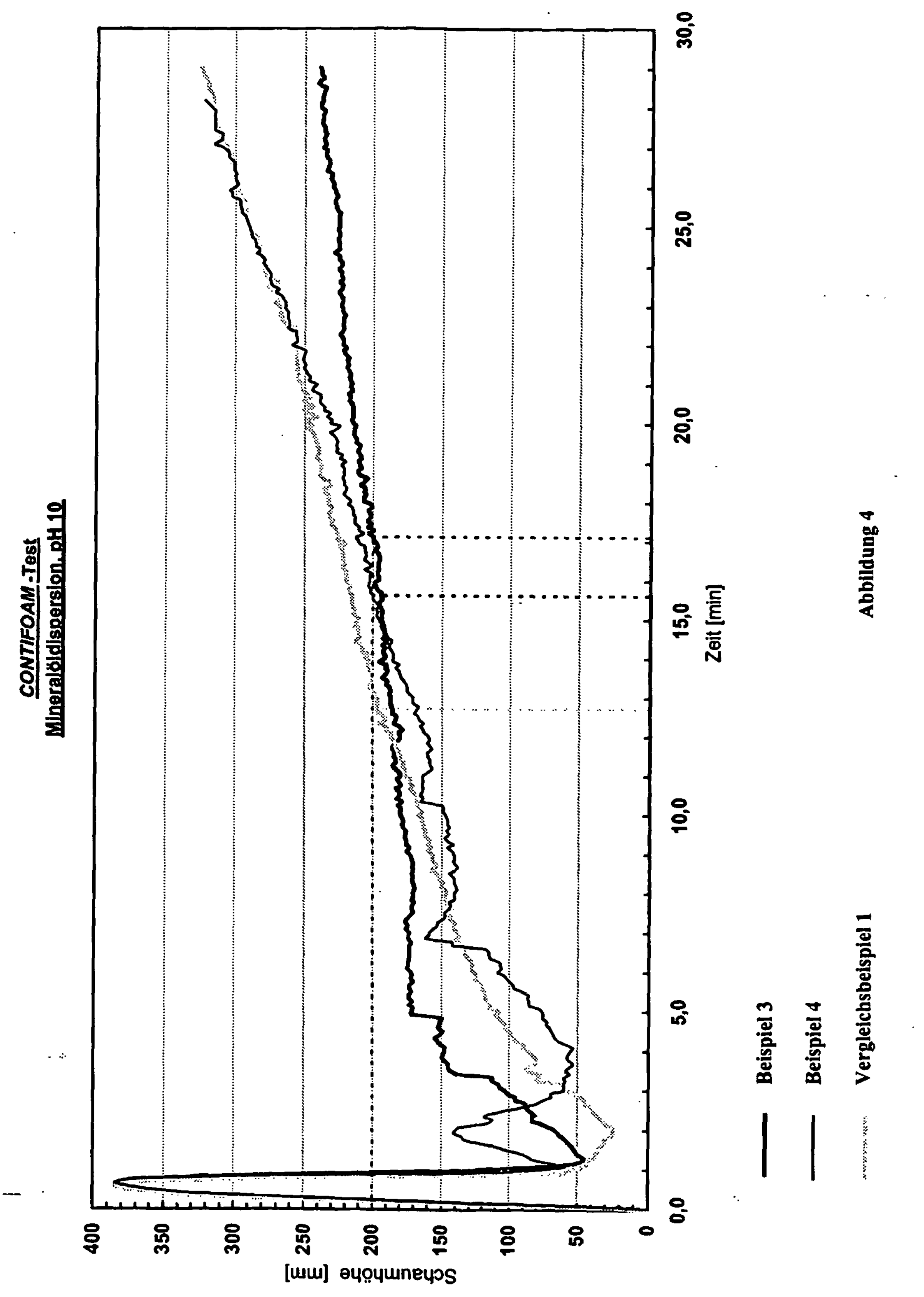
CONTIFOAM-Test
Mineralöldispersion, pH 10
Schaumhöhe [mm]
400
350
300
250
200
150
100
50
0
0,0
5,0
10,0
15,0
20,0
25,0
30,0
Zeit [min]
Beispiel 3
Beispiel 4
Vergleichsbeispiel 1

Abbildung 4

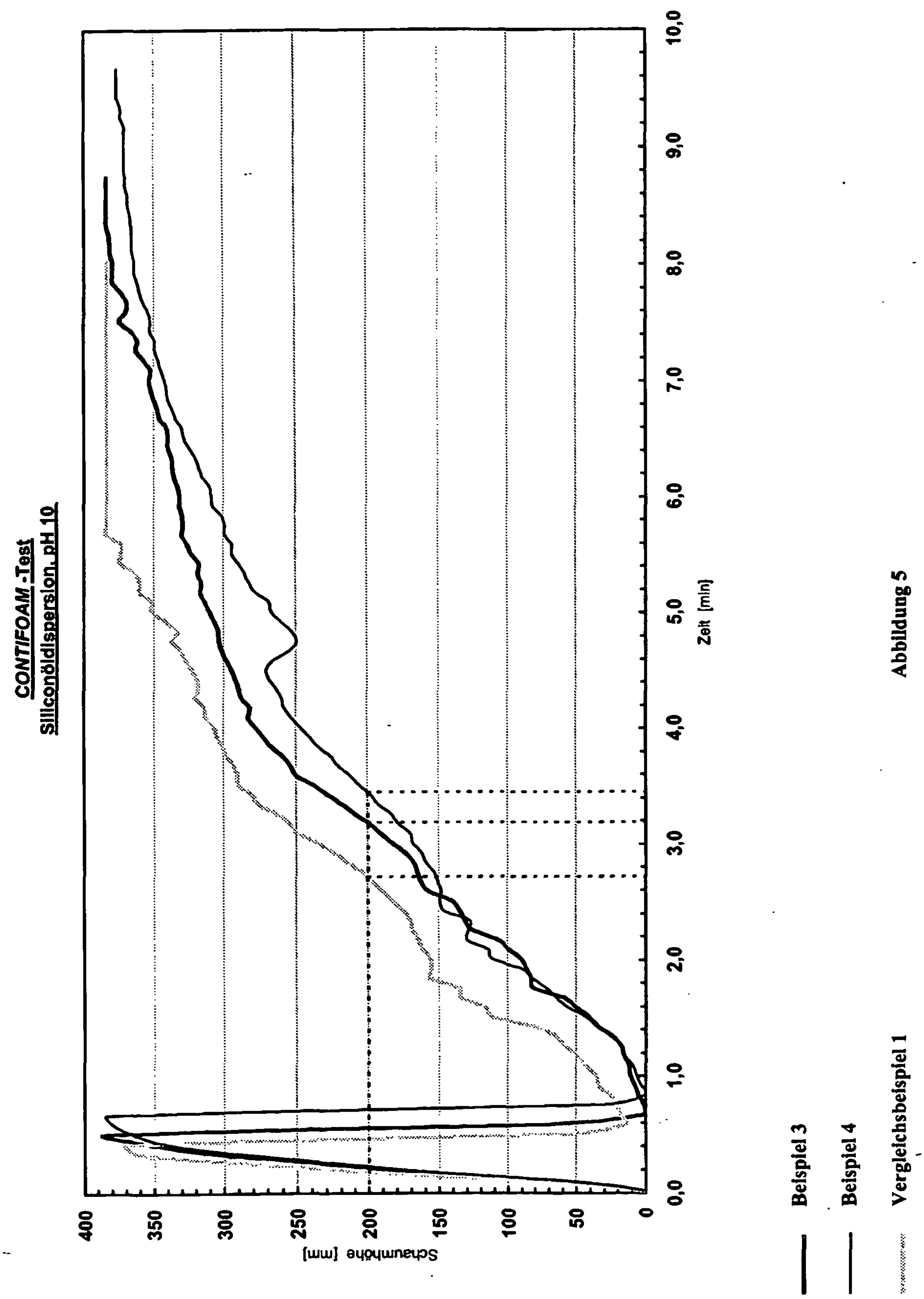
CONTIFOAM -Test
Siliconöldispersion, pH 10
Schaumhöhe [mm]
400
350
300
250
200
150
100
50
0
Zeit [min]
0,0
1,0
2,0
3,0
4,0
5,0
6,0
7,0
8,0
9,0
10,0
Beispiel 3
Beispiel 4
Vergleichsbeispiel 1

Abbildung 5